# EUROPÄISCHE PATENTANMELDUNG

(11) **EP 4 052 830 A1**
(43) Veröffentlichungstag der Anmeldung: **07.09.2022**
(21) Anmeldenummer: 21159979.0
(22) Anmeldetag: 01.03.2021
(51) Int. Cl.: B23K 9/067

(54) **ENTKOPPLUNGSVORRICHTUNG FÜR EINE HF SPANNUNG AUF EINER DATENLEITUNG**

(71) Anmelder: Fronius International GmbH, 4643 Pettenbach (AT)
(72) Erfinder: Hofmanninger, Franz, 4600 Wels-Thalheim (AT); Ramsauer, Christoph, 4600 Wels-Thalheim (AT)
(74) Vertreter: Patentanwälte Pinter & Weiss OG

(57) **Zusammenfassung**

Um das Abfließen von HF Zündenergie über eine Datenleitung (20) zur Datenübertragung zwischen einem Schweißgerät (2) und einem anderen Teil einer Schweißanordnung (1) zu reduzieren, ist vorgesehen, dass ein erster Datenleitungsabschnitt (20a) der Datenleitung (20) mit einem ersten Kopplungsglied (21a) und ein zweiter Datenleitungsabschnitt (20b) der Datenleitung (20) mit einem zweiten Kopplungsglied (21b) verbunden ist, wobei das erste Kopplungsglied (21a) und das zweite Kopplungsglied (21b) zur galvanischen Trennung der Datenleitung (20) über eine drahtlose Kopplungsstrecke (23) miteinander verbunden sind, und für das erste Kopplungsglied (21a) und das zweite Kopplungsglied (21b) jeweils eine eigene Stromversorgung (22a, 22b) vorgesehen ist, wobei die Stromversorgungen (22a, 22b) des ersten Kopplungsgliedes (21a) und des zweiten Kopplungsgliedes (21b) für eine HF Spannung auf der Datenleitung (20) als Folge der HF Zündspannung (uz) voneinander entkoppelt ausgeführt sind.

## Beschreibung

Die gegenständliche Erfindung betrifft eine Entkopplungsvorrichtung für eine HF (Hochfrequenz) Spannung auf einer Datenleitung, wobei in der Entkopplungsvorrichtung ein erster Datenleitungsabschnitt der Datenleitung mit einem ersten Kopplungsglied und ein zweiter Datenleitungsabschnitt der Datenleitung mit dem zweiten Kopplungsglied verbunden ist, und wobei das erste Kopplungsglied und das zweite Kopplungsglied zur galvanischen Trennung der Datenleitung über eine drahtlose Kopplungsstrecke miteinander verbunden sind. Die Erfindung betrifft auch die Verwendung einer solchen Entkopplungsvorrichtung in einer Schweißanordnung mit einem Schweißgerät und einer mit dem Schweißgerät verbundener Schweißkomponente und mit einer HF Zündeinheit zum Erzeugen einer HF Zündspannung bzw. HF Zündenergie zum Zünden eines Lichtbogens zum Schweißen, wobei zwischen dem Schweißgerät und der Schweißkomponente eine Datenleitung vorgesehen ist und über die Datenleitung eine Datenkommunikation zwischen dem Schweißgerät und der Schweißkomponente implementiert ist.

Es sind verschiedene Lichtbogenschmelzschweißverfahren bekannt, wie beispielsweise das MIG (Metall Inertgas)-, MAG (Metall Aktivgas)-, WIG (Wolframinertgas)-, MMA (manual metal arc)-, WAAM (wire arc additive manufacturing)- oder Plasmaschweißen. Beim MIG-, MAG-, MMA-, und WAAM-Schweißen wird eine abschmelzende Elektrode verwendet, die gleichzeitig als Schweißzusatzwerkstoff dient. Beim WIG- und Plasmaschweißen wird eine nichtabschmelzende Elektrode verwendet und ein Zusatzwerkstoff wird beim Schweißen dem Lichtbogen bedarfsweise separat zugeführt. Zum Zünden des Lichtbogens zu Beginn des Schweißens sind ebenso verschiedene Verfahren bekannt. Im Wesentlichen gibt es die Kontaktzündung, bei der zum Zünden ein Kontakt zwischen der Schweißelektrode und dem zu schweißenden Werkstück hergestellt wird und nach dem Kontakt beim Abheben der Schweißelektrode vom Werkstück durch den durch die Schweißelektrode fließenden elektrischen Strom der Lichtbogen gezündet wird. Beim berührungslosen Zünden wird die Schweißelektrode in einem Abstand zum zu schweißenden Werkstück gehalten und es wird eine hochfrequente Hochspannung an die Schweißelektrode angelegt, um den Gasraum zwischen der Schweißelektrode und einer Werkstückoberfläche zu ionisieren und elektrisch leitfähig zu machen und folglich über einen auftretenden Kaskadeneffekt einen stabilen Lichtbogen zu zünden. Bei diesem Hochfrequenzzünden (HF Zünden) wird in der Regel ein Hochspannungstransformator verwendet, dessen Sekundärseite beispielsweise in einer mit der Schweißelektrode verbundenen Schweißleitung oder parallel zwischen den beiden Schweißleitungen angeordnet ist, um die HF Zündspannung (in der Regel eine Hochspannung im Bereich von 1 kV bis 20 kV) in eine Schweißleitung oder parallel zwischen die beiden Schweißleitungen einzukoppeln. Sowohl die verschiedenen Schweißverfahren, als auch die verschiedenen Zündverfahren sind beim Handschweißen und beim Roboterschweißen anwendbar.

Um eine möglichst stabile HF Zündung zu gewährleisten ist es vorteilhaft, dass die HF Zündenergie für den HF Zündfunken zwischen der Schweißelektrode und dem Werkstück zum Zünden des Lichtbogens verwendet wird und nicht als Leckstrom (Leckagestrom) und/oder als Kriechstrom über andere nicht erwünschte elektrisch leitende und bzw. oder üblicherweise elektrisch nichtleitende Pfade ganz oder teilweise abfließt. Aufgrund der sehr hohen HF Zündspannung können auch an sich nichtleitende Pfade leitend werden und Leckströme oder Kriechströme auftreten. Pfade, über die Kriechströme oder Leckageströme auftreten können, werden in weiterer Folge allgemein als elektrische Leckagepfade bezeichnet. Die zulässige HF Zündenergiemenge ist aus Sicherheitsgründen durch Normen, wie beispielsweise durch die EN 60974-3 für Lichtbogenzünd- und Stabilisierungseinrichtungen, begrenzt, sodass die Zündenergie nicht beliebig angehoben werden kann, um mögliche Verluste durch elektrische Leckagepfade auszugleichen. Es ist daher wichtig, den Abfluss von HF Zündenergie über elektrische Leckagepfade zu reduzieren bzw. zu eliminieren. Hierzu ist es schon bekannt, in der Schweißleitung zwischen dem Leistungsteil eines Schweißgerätes und dem Hochfrequenzgenerator zum Erzeugen der HF Zündspannung, eine Sperrdrossel anzuordnen, um die ganze HF Zündenergie zur Schweißelektrode zu leiten und den Abfluss von HF Zündenergie in das Schweißgerät über die Schweißleitung zu unterbinden, wie beispielsweise in EP 1 704 012 B1 dargestellt. Solche Sperrdrosseln sind allerdings nur in elektrischen Leitungen sinnvoll anwendbar, über die niederfrequente Nutzsignale fließen, da die Sperrdrosseln ansonsten auch ein hochfrequentes Nutzsignal in unerwünschter Weise dämpfen oder gänzlich blocken würden. Solche niederfrequenten Nutzsignale sind beispielsweise in Schweißleitungen (Schweißstrom) oder in elektrischen Versorgungsleitungen anzutreffen.

In modernen Schweißbrennern ist oftmals auch Elektronik verbaut, die über eine Versorgungsleitung vom Schweißgerät mit Versorgungsspannung versorgt wird. Die Elektronik im Schweißbrenner dient z.B. der Steuerung des Schweißprozesses. Am Schweißbrenner können Bedienelemente für den Schweißer angeordnet sein, beispielsweise Taster, Knöpfe, Drehknopfe usw., die vom Schweißer betätigt werden können, um den Schweißprozess zu beeinflussen, beispielsweise durch das Einstellen oder Verstellen von Schweißparametern. Ebenso können am Schweißbrenner Anzeigeelemente, wie ein Display, Leuchten usw., vorgesehen sein, um den Schweißer Informationen zum Schweißen oder zum Schweißprozess anzuzeigen. Außerdem kann im Schweißbrenner oder in einem Drahtvorschub ein Messelement vorgesehen sein, beispielsweise zur Messung der Lichtbogenspannung oder eines Schweißstromes, wobei mit dem Messelement erfasste Messwerte über eine Datenleitung an das Schweißgerät übertragen werden. Die Lichtbogenspannung wird beispielsweise zur aktiven Regelung des Schweißdrahtvorschubs (abschmelzende Elektrode oder separater Zusatzwerkstoff) benötigt. Es kann auch eine Messleitung vom Schweißbrenner zum Schweißgerät geführt sein, um die Lichtbogenspannung im Schweißgerät zu messen, wobei eine solche Messleitung für die gegenständliche Erfindung ebenso als Datenleitung angesehen werden kann. Über die Datenleitung können somit analoge oder digitale Daten oder Signale von Bedienelementen oder Anzeigeelementen oder auch anderen Teilen einer Schweißanordnung übertragen werden.

Für Datenleitungen müssen im Umfeld von Schweißgeräten spezielle Datenkabel mit elektrischer Abschirmung und mit vorzugsweise verdrillten Leitungen verwendet werden, insbesondere wenn eine hohe Datenübertragungsgeschwindigkeit von 1 Mbit/s bis zu mehreren Gbit/s und eine stabile Datenübertragung benötigt wird, da Schweißströme hohe Änderungsraten (z.B. steile Schweißstromflanken) aufweisen können, was zu induktiven Störungen oder Einkopplungen auf der Datenleitung führen kann. Die elektrische Abschirmung der Datenleitung, die üblicherweise geerdet ist, ist aber ein idealer elektrischer Leckagepfad, da die HF Zündspannung, beispielsweise im Schlauchpaket, kapazitiv in die Abschirmung der Datenleitung einkoppeln kann. Bei Verwendung von Datenleitungen ohne Abschirmung kann es zu einer HF Einkopplung in die Adern der Datenleitung kommen, wodurch ebenso HF Zündenergie von der Schweißelektrode abfließen kann und Störungen bei der Datenkommunikation auftreten können. Die Verwendung von Sperrdrosseln ist für Messleitungen schon bekannt, beispielsweise aus EP 1 021 269 B1, wobei die Sperrdrossel einer Messleitung mit der Sekundärseite eines Hochspannungstransformators zur HF Zündung gewickelt ist. Die Sperrdrossel reduziert hochfrequente Wechselströme, wodurch zwar das Abfließen der HF Zündenergie verringert werden könnte, aber gleichzeitig würde durch die Tiefpasswirkung der Drossel auch die mögliche Informationsübertragung über die Messleitung eingeschränkt, beispielsweise durch Dämpfung oder durch Beschränkung des Frequenzbereichs eines Messsignals. Es wäre aber möglich, eine geschirmte oder ungeschirmte Datenleitung zu einer Sperrdrossel zu wickeln, um das Abfließen von Zündenergie über die Datenleitung zu verringern. Bei einer Sperrdrossel in der Datenleitung würde jedoch HF Zündenergie auch durch das zwangsweise hochfrequente Ummagnetisieren der Sperrdrossel verloren gehen.

Ein anderes Problem von Sperrdrosseln in geschirmten Datenleitungen liegt darin, dass aufgrund der Abschirmung und des Aufbaus der Datenleitung der Biegeradius der Datenleitung aufgrund von Herstellervorgaben einen bestimmten Wert nicht unterschreiten darf, um die Abschirmung nicht abzuknicken und zu beschädigen. Das führt aber dazu, dass eine Sperrdrossel, die durch Umwicklung eines Eisenkerns mit den geschirmten Datenleitungen gebildet wird, eine große Baugröße einnehmen würde. Das macht die Sperrdrossel unhandlich, teuer und in den meisten Fällen unbrauchbar. In geschirmten Datenleitungen zur Datenübertragung, in denen höherfrequente Nutzsignale vorkommen, würden Sperrdrosseln damit zwar grundsätzlich ebenso funktionieren, diese werden aber auf Grund eines Mindestbiegeradius der geschirmten Datenleitungen jedoch sehr schnell großvolumig, teuer und schwer.

Die Verwendung einer Sperrdrossel für eine Datenleitung (oder auch für mehrere Datenleitungen) ist daher aus vielen Gründen wenig zweckmäßig.

Es ist daher eine Aufgabe der gegenständlichen Erfindung, das Abfließen von HF Zündenergie über eine Datenleitung zur Datenübertragung zwischen einem Schweißgerät und einem anderen Teil der Schweißanordnung zu reduzieren.

Diese Aufgabe wird durch die Merkmale der unabhängigen Ansprüche gelöst.

Durch die galvanische Trennung der Datenleitung, inklusive einer galvanischen Trennung einer möglichen Abschirmung der Datenleitung, ist ein allfälliger HF Leckagepfad über die Datenleitung unterbunden und das Abfließen von HF Zündenergie kann vermindert werden. Um zu verhindern, dass sich ein Leckagepfad über die Stromversorgung der Kopplungsglieder ausbildet, ist vorgesehen, dass die Kopplungsglieder von separaten Stromversorgungen, die für eine gegebene HF Spannung auf der Datenleitung voneinander entkoppelt ausgeführt sind, mit elektrischer Energie versorgt werden, wodurch auch über die Stromversorgungen keine HF Zündenergie abfließen kann. Damit kann eine wirkungsvolle HF Entkopplung auf der Datenleitung ohne Sperrdrossel in der Datenleitung realisiert werden.

Vorteilhafterweise wird die Stromversorgung des ersten Kopplungsglieds und/oder des zweiten Kopplungsgliedes als Batterie ausgeführt. Getrennte Batterien können auf einfache Weise für die HF Spannung entkoppelt ausgeführt werden, beispielswiese durch ausreichende räumliche Beabstandung der Batteriepole, um die Ausbildung einer Funkenstrecke zur unterbinden.

In einer besonders vorteilhaften Ausgestaltung wird eine Versorgungsspannung führende Versorgungsleitung zur Stromversorgung der Koppelungsglieder genutzt. Dazu wird in der Versorgungsleitung eine Sperrdrossel angeordnet, die ausgelegt ist, die beiden Seiten der Sperrdrossel für eine gegebene HF Spannung auf der Versorgungsleitung zu entkoppeln und dass die Stromversorgung des ersten Kopplungsgliedes die Versorgungsspannung auf einer Seite der Sperrdrossel abgreift. Vorteilhaft greift die Stromversorgung des zweiten Kopplungsgliedes dessen Versorgungsspannung auf der anderen Seite der Sperrdrossel ab.

In einer ebenso vorteilhaften Ausgestaltung nutzt man Lichttechnik zur Entkopplung der Stromversorgungen. Hierzu ist die Stromversorgung des ersten Kopplungsgliedes und/oder des zweiten Kopplungsgliedes als Photovoltaikelement ausgeführt, und eine Lichtquelle vorgesehen, die das Photovoltaikelement mit Licht beaufschlagt. Dabei ist es vorteilhaft, wenn die Lichtquelle von der Stromversorgung des ersten Koppelungsgliedes mit elektrischer Energie versorgt ist und das Photovoltaikelement als Stromversorgung des zweiten Koppelungsgliedes vorgesehen ist. Damit kann erreicht werden, dass die Stromversorgungen über die Lichtstrecke für die HF Spannung entkoppelt werden.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 eine Schweißanordnung mit HF Zündung und einer Datenleitung zur Datenkommunikation zwischen einem Schweißgerät und einer damit über die Datenleitung verbundener Schweißkomponente,
Fig.2 eine erfindungsgemäße Entkoppelungsvorrichtung,
Fig.3 eine Ausgestaltung eines Koppelungsgliedes,
Fig.4 eine erfindungsgemäße Entkoppelungsvorrichtung mit elektrischer Versorgung über eine Versorgungsleitung,
Fig.5 und 6 Ausgestaltungen eines Koppelungsgliedes mit Batterie und
Fig.7 eine HF Entkopplung der Stromversorgungen über eine Lichtstrecke.

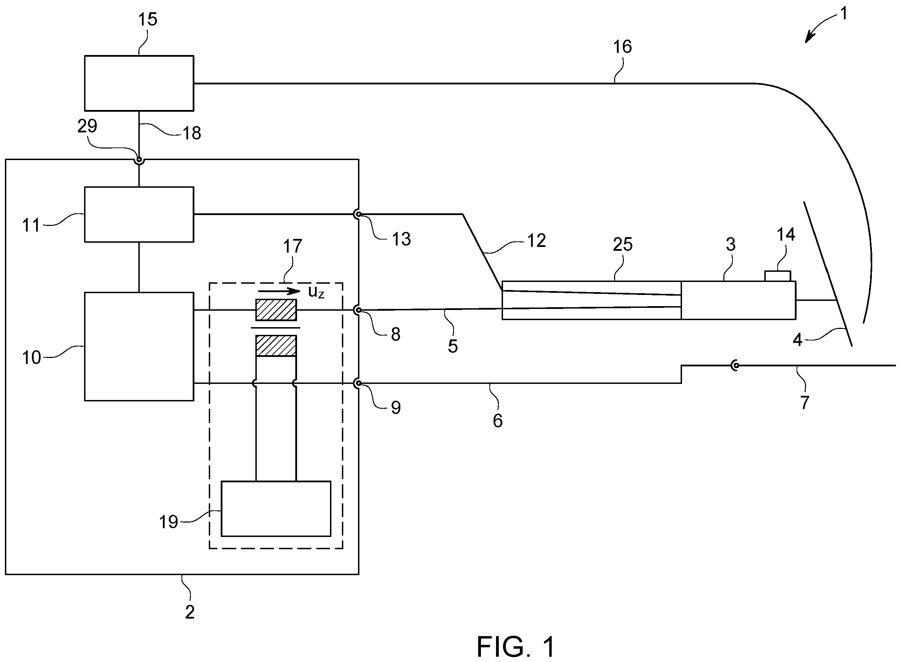

In Fig.1 ist beispielhaft und schematisch eine Schweißanordnung 1 zum WIG-Schweißen dargestellt. Eine Schweißelektrode 4 an einem Schweißbrenner 3, in diesem Fall eine nicht abschmelzende Schweißelektrode, ist über eine Elektrodenleitung 5 mit einem Schweißgerät 2 verbunden, beispielsweise über eine Elektroden-Strombuchse 8 am Schweißgerät 2. Das zu schweißende Werkstück 7 ist über eine Masseleitung 6 mit dem Schweißgerät 2 verbunden, beispielsweise über eine Masse-Strombuchse 9 am Schweißgerät 2. Beim Schweißen brennt zwischen der Schweißelektrode 4 und dem Werkstück 7 ein Lichtbogen und es fließt ein Schweißstrom, der von einem Leistungsteil 10 im Schweißgerät 2 erzeugt wird. Im Schweißgerät 2 ist eine Schweißsteuereinheit 11 vorgesehen, die den Schweißprozess steuert und überwacht. Am Schweißgerät 2 kann auch eine Benutzerschnittstelle (nicht dargestellt) vorgesehen sein, über die ein Benutzer Schweißparameter des Schweißprozesses auswählen, einstellen oder verändern kann. Der Schweißbrenner 3 ist über eine Schweißsteuerleitung 12 mit dem Schweißgerät 2 verbunden, beispielsweise über eine Steuerleitungsbuchse 13 am Schweißgerät 2. Über die Schweißsteuerleitung 12 können Bedienelemente 14 am Schweißbrenner 3, beispielsweise Tasten, Displays, Drehknöpfe usw., mit der Schweißsteuereinheit 11 verbunden sein, wodurch das Schweißgerät 2 und der Schweißbrenner 3 unidirektional oder bidirektional Daten austauschen können. Über solche Bedienelemente 14 am Schweißbrenner 3 können ebenfalls Schweißparameter des Schweißprozesses ausgewählt, eingestellt oder verändert werden und/oder es können eingestellte Schweißparameter angezeigt werden.

Üblicherweise sind die Elektrodenleitung 5 und die Schweißsteuerleitung 12 in einem gemeinsamen Schlauchpaket 25 angeordnet. In einem solchen Schlauchpaket 25 könnten in hinlänglich bekannter Weise auch noch weitere Leitungen angeordnet sein, beispielsweise eine Leitung für Schutzgas, Kühlmittelleitungen für eine Brennerkühlung, eine Schweißdrahtleitung usw.

Im in Fig.1 gezeigten Ausführungsbeispiel ist auch eine Schweißdrahtvorschubeinheit 15 vorgesehen, die Schweißdraht 16 zur Schweißstelle zuführt. Die Schweißdrahtvorschubeinheit 15 kann in das Schweißgerät 2 integriert sein, kann aber auch als separate Einheit ausgeführt sein. Die Schweißdrahtvorschubeinheit 15 kann zur Durchführung des Schweißprozesses über eine Drahtsteuerleitung 18 von der Schweißsteuereinheit 11 gesteuert werden. Die Drahtsteuerleitung 18 kann, insbesondere bei einer externen Schweißdrahtvorschubeinheit 15, in eine Drahtsteuerleitungsbuchse 29 am Schweißgerät 2 gesteckt sein, die wiederum mit der Schweißsteuereinheit 11 verbunden sein kann. In anderen Schweißanordnungen kann der Schweißdraht auch im Schlauchpaket 25 geführt sein und kann auch als abschmelzende Schweißelektrode fungieren.

Die Schweißsteuerleitung 12 kann verschiedene Leitungen umfassen. Beispielsweise kann eine elektrische Versorgungsleitung (auch mehrpolig) vorgesehen sein, um Bedienelemente 14 am Schweißbrenner 3 mit elektrischer Energie zu versorgen. Zur Datenübertragung zwischen dem Schweißgerät 2 und dem Schweißbrenner 3 kann in der Schweißsteuerleitung 12 auch eine Datenleitung 20 vorgesehen sein (in Fig.1 nicht dargestellt), über die ein Datenkommunikationsbus implementiert sein kann, über den Daten mit einem vorgegebenen Kommunikationsprotokoll übertragen werden können. Es kann als Datenleitung auch eine Mess- oder Signalleitung vorgesehen sein, beispielsweise um ein Spannungspotential an der Schweißelektrode 4 zu erfassen oder um analoge Signale zu übertragen.

Ebenso kann die Drahtsteuerleitung 18 verschiedene Leitungen umfassen. Beispielsweise kann eine elektrische Versorgungsleitung (auch mehrpolig) zur elektrischen Versorgung der Schweißdrahtvorschubeinheit 15 über das Schweißgerät 2 vorgesehen sein. Die Drahtsteuerleitung 18 kann auch eine Datenleitung 20 umfassen (in Fig.1 nicht dargestellt), über die ein Datenkommunikationsbus implementiert sein kann, über den Daten zur Steuerung und/oder zur Regelung des Schweißdrahtvorschubs mit einem vorgegebenen Kommunikationsprotokoll uni- oder bidirektional übertragen werden können.

Zur Zündung (auch im Sinne einer Wiederzündung) des Lichtbogens zum Schweißen kann neben einer gegebenenfalls vorhandenen Leerlaufspannungserhöhung (nicht dargestellt) und einer gegebenenfalls vorhandenen Hilfsspannungsquelle (nicht dargestellt) eine HF Spannungsquelle 19 in einer Hochfrequenz (HF) Zündeinheit 17 vorgesehen sein, die eine HF Zündspannung uz, üblicherweise in Form von Zündspannungsimpulsen mit einer Spannungsamplitude uz, erzeugt, welche in eine Schweißleitung, üblicherweise die Elektrodenleitung 5, eingekoppelt wird. Im Ausführungsbeispiel nach Fig.1 ist eine HF Spannungsquelle 19 vorgesehen, deren Ausgangsspannung mit einem HF Transformator auf die HF Zündspannung uz hochtransformiert wird. Die Sekundärwicklung des HF Transformators ist in dieser Ausführung in der Leitung zwischen dem Leistungsteil 10 und der Elektroden-Strombuchse 8 angeordnet und die HF Zündspannung uz wird in die Elektrodenleitung 5 eingekoppelt. Die HF Zündspannung uz kann aber auch zwischen der Elektrodenleitung 5 und der Masseleitung 6 angelegt werden. Die HF Zündeinheit 17 muss nicht zwingend im Schweißgerät 2 angeordnet sein, sondern könnte auch als separater Bauteil extern zum Schweißgerät 2 oder in einer Schweißdrahtvorschubeinheit 15 angeordnet sein.

Durch die HF Zündspannung uz wird das Gas im Umfeld der Schweißelektrode 4 ionisiert und ein Lichtbogen gezündet. Zur Ionisierung des Gases bzw. zur Ionisierung der Gasstrecke muss, je nach vorhandenem Abstand zwischen Schweißelektrode 4 und Werkstück 7, zur HF Zündung bekanntermaßen eine elektrische Hochspannung im Bereich von 1 kV bis 20 kV erzeugt werden. Die HF Zündspannung uz wird zum Zünden in Form von HF Spannungsimpulsen erzeugt, die üblicherweise sehr steile ansteigende Flanken, typischerweise mit Anstiegszeiten im 100 ns Bereich, aufweisen. Aus Sicherheitsgründen ist die zulässige HF Zündenergie beschränkt, beispielsweise mit maximal 4 J/s. Damit dürfte die gesamte Energie der HF Spannungsimpulse pro Sekunde maximal 4 J betragen.

Nach dem Zünden des Lichtbogens wird die HF Zündspannung uz wieder weggenommen und der Schweißprozess gestartet. Eine solche HF Zündung und mögliche Ausgestaltungen einer solcher HF Zündung sind hinlänglich bekannt.

Aufgrund der räumlichen Nähe der Schweißsteuerleitung 12 (mit einer Datenleitung 20) und der Elektrodenleitung 5, beispielsweise in einem Schlauchpaket 25 oder im Schweißbrenner 3, kann es beim Anlegen einer HF Zündspannung uz an die Elektrodenleitung 5 zu einem Übersprechen (induktiv oder kapazitiv oder auch über eine Funken- oder Kriechstrecke) zwischen der Elektrodenleitung 5 und einer Leitung der Schweißsteuerleitung 12 kommen, wodurch HF Zündenergie abfließt und weniger HF Zündenergie zum Zünden des Lichtbogens zur Verfügung steht. Es hat sich gezeigt, dass insbesondere die Schirmung einer geschirmten Datenleitung 20 in der Schweißsteuerleitung 12, beispielsweise ein geschirmtes Datenkabel für die Datenkommunikation, einen besonders guten HF Leckagepfad ausbildet. Ferner können elektrisch leitfähige Materialien, welche über gewisse Strecken parallel zur Datenleitung 20 verlaufen, beispielsweise Kabeltrassen oder Erdungsleitungen, ebenso einen guten HF Leckagepfad ausbilden.

Ein HF Leckagepfad kann sich aber auch über den Schweißdraht 16 ausbilden. Zum Zünden des Lichtbogens soll der Zündfunke von der Schweißelektrode 4 auf das Werkstück 7 überspringen. Es kann aber vorkommen, dass sich eine Funkenstrecke zwischen der Schweißelektrode 4 und dem Schweißdraht 16 ausbildet. Aufgrund der hohen Spannung der HF Zündspannung uz und auch aufgrund der steilflankigen Spannungsimpulse, kann die HF Zündspannung uz auch auf die Drahtsteuerleitung 18 übersprechen (induktiv, kapazitiv). Auch hier bildet die Schirmung einer geschirmten Datenleitung 20 in der Drahtsteuerleitung 18, beispielsweise ein geschirmtes Datenkabel für die Datenkommunikation, einen besonders guten HF Leckagepfad aus. Damit kann HF Zündenergie auch über den Schweißdraht 16 und die Drahtsteuerleitung 18 abfließen.

Über den HF Leckagepfad kann auf Grund einer HF Spannung ein HF Strom fließen, verursacht durch die HF Zündspannung uz. Der HF Strom und die HF Spannung sind natürlich auch von der Art des HF Leckagepfades abhängig. Die HF Spannung kann in der Größenordnung der HF Zündspannung uz sein, also ebenso im Hochspannungsbereich, und kann in bestimmten Fällen sogar der HF Zündspannung uz entsprechen.

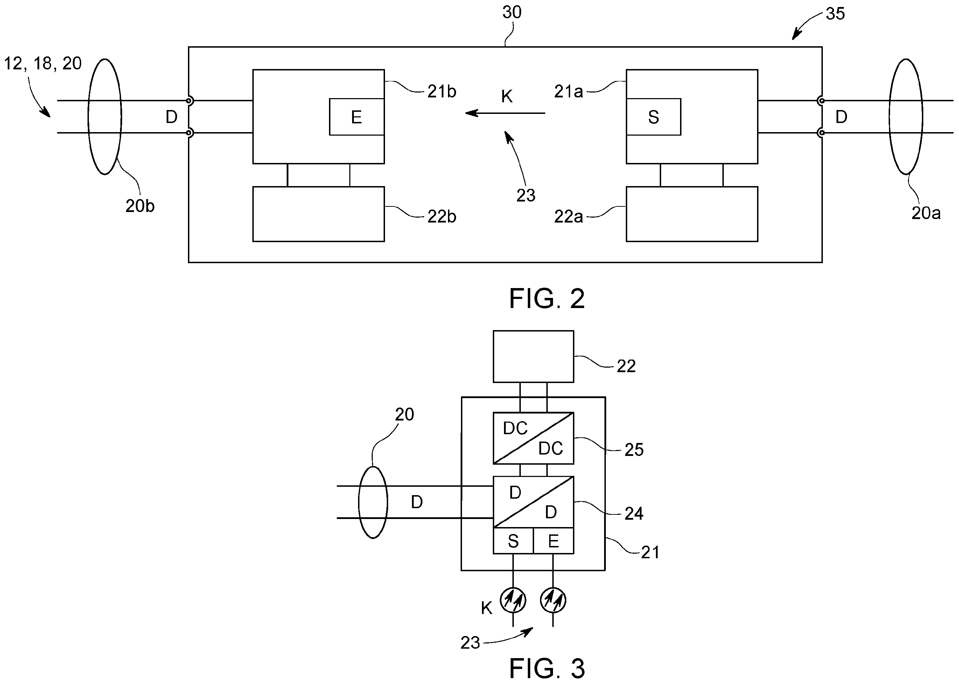

Nachdem die HF Zündenergie nicht beliebig gesteigert werden kann, soll ein derartiges Abfließen von HF Zündenergie über eine Schweißsteuerleitung 12 und/oder eine Drahtsteuerleitung 18, bzw. über eine darin angeordnete Datenleitung 20, vermieden oder zumindest weitestgehend reduziert werden. Um das zu erreichen ist eine Entkopplungsvorrichtung 35 für eine mögliche HF Spannung auf der Datenleitung 20 vorgesehen, wie nachfolgend mit Bezugnahme auf die Fig.2 beschrieben.

Eine Datenleitung 20, beispielsweise in der Drahtsteuerleitung 18 oder Schweißsteuerleitung 12, wird mit der HF Entkopplungsvorrichtung 35 galvanisch in einen ersten Datenleitungsabschnitt 20a und einen zweiten Datenleitungsabschnitt 20b getrennt. Eine allfällige Schirmung der Datenleitung 20 wird dabei ebenso galvanisch getrennt. Der erste Datenleitungsabschnitt 20a wird mit einem ersten Kopplungsglied 21a verbunden und der zweite Datenleitungsabschnitt 20b mit einem zweiten Kopplungsglied 21b. Die Kopplungsglieder 21a, 21b sind in der HF Entkopplungsvorrichtung 35 über eine nichtelektrische Kopplungsstrecke 23 miteinander verbunden. Die Kopplungsglieder 21a, 21b wandeln die elektrischen Signale D auf der Datenleitung 20 in ein drahtlos übertragbares Sendesignal K um, das von einem drahtlosen Sender S über die drahtlose Kopplungsstrecke 23 an einen drahtlosen Empfänger E übertragen wird. Für eine bidirektionale Übertragung kann in beiden Kopplungsgliedern 21a, 21b jeweils ein Sender S und ein Empfänger E vorgesehen sein. Prinzipiell wäre es auch möglich, dass eine einzelne Leitung bidirektional betrieben werden kann und an beiden Enden jeweils einen Sender S und/oder einen Empfänger E aufweist. Unter "drahtlos" wird hier eine Übertragung ohne elektrischen Leiter als Übertragungsstrecke zwischen Sender S und Empfänger E verstanden, also eine elektrisch isolierende Übertragungsstrecke. Die drahtlose Kopplungsstrecke 23 kann beispielsweise Luft, ein Vakuum, ein elektrisch nichtleitendes Fluid oder ein Lichtwellenleiter sein, ist aber jedenfalls kein elektrischer Leiter. Das drahtlos übertragbare Sendesignal K kann beispielsweise als elektromagnetische Welle (Licht) vorliegen, oder als Schallwelle (zur akustischen Übertragung), als magnetisches Wechselfeld (induktive Übertragung), sofern die Luft- und Kriechstrecken eingehalten werden können.

Jedes Kopplungsglied 21a, 21b hat in der Entkopplungsvorrichtung 35 eine eigene Stromversorgung 22a, 22b für die darin implementierte Umsetzeinheit zur Umwandlung der elektrischen Signale D auf der Datenleitung 20 in das drahtlos übertragbare Sendesignal K. Die Umsetzeinheit im Kopplungsglied 21a, 21b kann als Wandlereinheit (converting unit), Datenumsetzer, Übertragungseinheit (transceiver unit), Übertrager (transceiver) oder Signalumsetzer (signal converter) ausgeführt sein. Zwischen den Stromversorgungen 22a, 22b gibt es keinen elektrischen Pfad für ein Abfließen der HF Zündspannung uz, was beispielsweise durch eine entsprechende Auslegung oder Gestaltung sichergestellt werden kann.

Eine mögliche Ausführung eines Kopplungsgliedes 21 mit Umsetzeinheit ist in Fig.3 dargestellt. Das elektrische Signal D auf der Datenleitung 20 wird in einem Digital/Digital Wandler 24 in geeigneter Weise umgewandelt und über einen Sender S als Sendesignal K drahtlos versendet. Die Koppelungsstrecke 23 ist in diesem Ausführungsbeispiel als Lichtwellenleiter ausgeführt. Umgekehrt kann ein über einen Empfänger E drahtlos erhaltenes Sendesignal K mit dem Digital/Digital Wandler 24 in das elektrische Signal D der Datenleitung 20 umgewandelt werden. Es ist offensichtlich, dass der Digital/Digital Wandler 24 an das Datenkommunikationsprotokoll der Datenleitung 20 und an die Art der drahtlosen Übertragung auf der Koppelungsstrecke 23 angepasst ist, ebenso wie der Sender S und der Empfänger E. Es kann auch ein Spannungswandler 25 vorgesehen sein, beispielsweise ein DC/DC Wandler wie in Fig.3 dargestellt, um die Versorgungsspannung der Stromversorgung 22 an die Bedürfnisse des Koppelungsgliedes 21 anzupassen. Ein Fachmann ist in der Lage das Koppelungsglied 21 ohne weitere Ausführungen dazu auf den jeweiligen Anwendungsfall entsprechend anzupassen.

Die einzelnen Komponenten des Koppelungsgliedes 21 werden üblicherweise als Elektronik ausgeführt. Die Elektronikschaltung wird dazu üblicherweise auf einer Leiterplatte angeordnet, auf der die Bauteile der Elektronikschaltung eng aneinander liegen. Man muss sich vor Augen halten, dass die HF Zündspannung uz dafür ausgelegt ist, Zündstrecken von mehreren Zentimetern zu überwinden. Eine HF Spannung, die in der Größenordnung der HF Zündspannung uz sein kann, auf der Datenleitung 20, oder deren Abschirmung, kann daher in einer solchen Elektronikschaltung mit kleinen Abständen zwischen den Leitungen und Bauteilen einfach übertragen werden, beispielsweise durch induktives oder kapazitives Übersprechen oder durch eine sich ausbildende Funken- oder Kriechstrecke. Das ist auch ein Grund, warum die Stromversorgungen 22a, 22b (siehe insbesondere in Fig. 2) für die HF Spannung voneinander entkoppelt ausgeführt werden, weil die HF Spannung ansonsten auch über die Stromversorgungen 22a, 22b weitergeleitet werden könnte.

Mittels der Kopplungsglieder 21a, 21b und der drahtlosen Koppelungsstrecke 23 wird eine an der Datenleitung 20, beispielsweise in deren Abschirmung, anliegende HF Spannung gesperrt und kann nicht vom ersten Datenleitungsabschnitt 20a auf den zweiten Datenleitungsabschnitt 20b, oder umgekehrt, übertragen werden. Aufgrund der separaten Stromversorgungen 22a, 22b kann sich auch über die Stromversorgungen 22a, 22b kein HF Leckagepfad ausbilden und es kann kein HF Strom fließen. Das zu übertragende elektrische Signal D auf der Datenleitung 20 wird dadurch nicht beeinflusst.

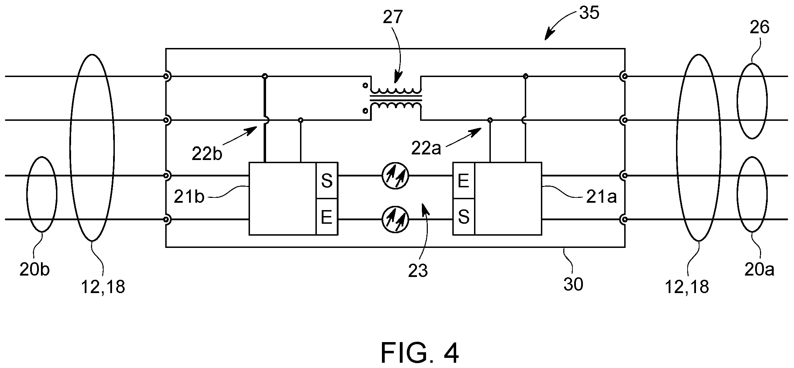

Eine vorteilhafte Ausgestaltung der Stromversorgungen 22a, 22b wird mit Bezugnahme auf die Fig.4 erläutert. Die Ausführung der Koppelungsglieder 21a, 21b ist darin wie oben beschrieben, hier beispielsweise mit Lichtwellenleiter als Koppelungsstrecke 23.

Neben der Datenleitung 20 ist in diesem Fall auch eine Versorgungsleitung 26 angeordnet, über die bestimmte Bauteile vom Schweißgerät 2 mit elektrischer Energie versorgt werden, beispielsweise eine Schweißdrahtvorschubeinheit 15 oder Bedienelemente 14 am Schweißbrenner 3. Zur HF Entkopplung ist in der Versorgungsleitung 26 in bekannter Weise eine Sperrdrossel 27 angeordnet. Zur Ausbildung der Sperrdrossel 27 sind die Adern der Versorgungsleitung 26 in bekannter Weise auf einen Ferritkern gewickelt. An der Sperrdrossel 27 könnte auch noch eine weitere Beschaltung, mit Induktivitäten, Kapazitäten und/oder Widerständen, vorgesehen sein, beispielsweise um die Dämpfung anzupassen. Die Sperrdrossel 27 verhindert, dass eine HF Spannung über die Versorgungsleitung 26 übertragen wird. Die Versorgungsleitung 26 an den beiden Seiten der Sperrdrossel 27 ist somit HF entkoppelt. Das kann genutzt werden, um die Kopplungsglieder 21a, 21b mit elektrischer Energie zu versorgen. Jedes der beiden Kopplungsglieder 21a, 21b bezieht die benötigte elektrische Energie von der Versorgungsleitung 26 an einer der beiden Seiten der Sperrdrossel 27, wodurch die Stromversorgungen 22a, 22b für die HF Zündspannung uz voneinander entkoppelt ausgeführt sind.

Ferner könnte in einer speziellen Ausführungsform eines Datennetzwerks eine Datenleitung 20a zur Versorgung eines ersten Digital/Digital Wandlers 24 dienen und die Datenleitung 20b zur Versorgung eines zweiten Digital/Digital Wandlers 24 dienen, wobei die beiden Versorgungen entsprechend entkoppelt ausgeführt wären.

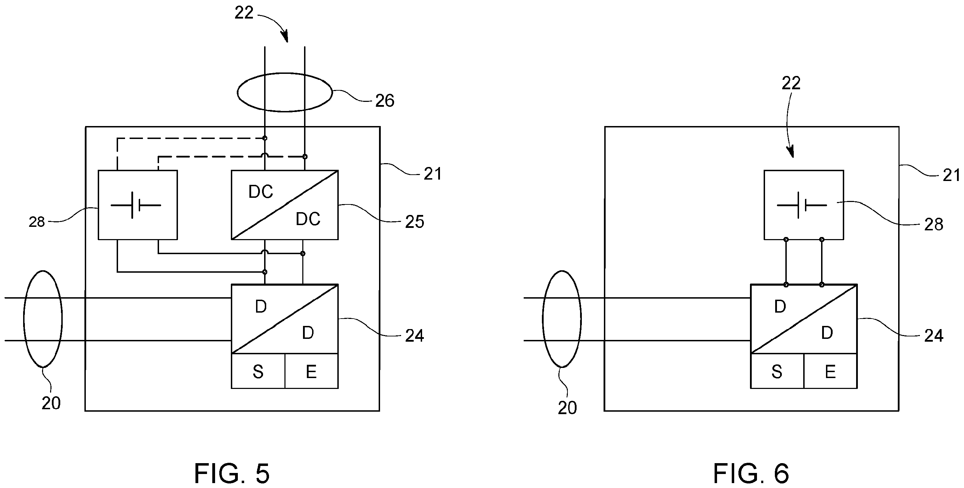

Eine Stromversorgung 22a, 22b kann auch als separate Batterie 28 ausgeführt sein, wie in Fig.6, oder es kann eine zusätzliche Batterie 28 vorgesehen sein, wie in Fig.5. Ferner kann auch vorgesehen sein, dass eine Batterie 28 mit einfachen Mitteln getauscht werden kann. Als Batterie 28 können auch handelsübliche wieder aufladbare Akkumulatoren wie beispielsweise Lithium-Ionen-Zellen und dergleichen zum Einsatz kommen. Es wäre auch denkbar, die wieder aufladbaren Zellen der Stromversorgungen 22a, 22b jeweils einzeln über geeignete Adapter wie beispielsweise USB-Adapter aufladen zu können. Hierbei wäre es auch denkbar, dass unter Einhaltung einer galvanischen Trennung, Photovoltaikelemente diese Energie liefern. Als Photovoltaikelement wird jedes Bauteil, beispielsweise eine Solarzelle, verstanden, das Licht direkt in elektrischen Strom umwandelt, beispielsweise aufgrund des photoelektrischen Effekts. Für einen Fachmann wäre es auch naheliegend, wenn im als Sendeeinheit fungierenden Kopplungsglied 21 eine Batterie 28 mit größerer Ladekapazität verbaut ist, als in einem rein als Empfänger fungierendem Kopplungsglied 21.

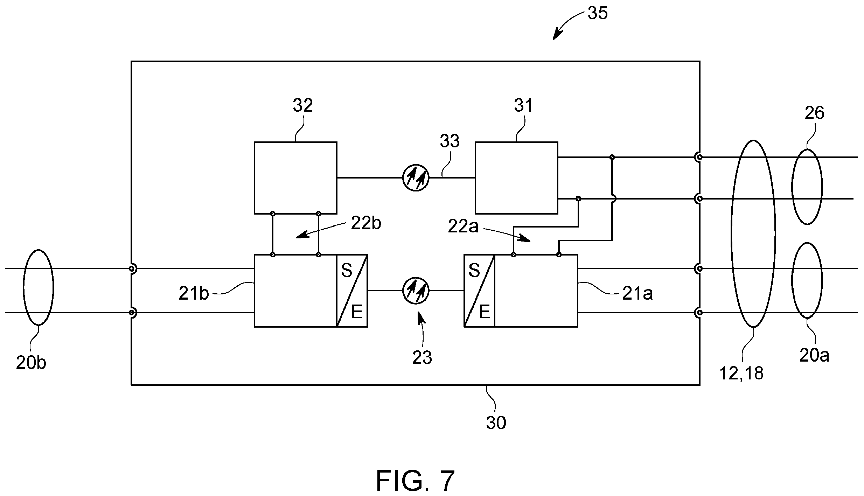

Ferner wäre als Stromversorgung 22 auch eine Energiezuführung zu einem Kopplungsglied 21a, 21b über Lichttechnik, insbesondere Lasertechnik, möglich, da diese Technik ebenfalls eine perfekte galvanische Trennung mit sich bringen würde. Das ist beispielsweise an einem Ausführungsbeispiel in Fig.7 dargestellt. Beispielsweise könnte hier Licht, z.B. Laserlicht, von einer Lichtquelle 31, z.B. ein Laser, auf ein Photovoltaikelement 32 fokussiert werden, beispielsweise über einen Lichtwellenleiter 33. Die Lichtquelle 31 kann von einer Versorgungsleitung 26 (wie in Fig.7) oder auch von einer Batterie 28 mit elektrischer Energie versorgt werden. Diese Versorgungsleitung 26 oder eine Batterie 28 kann auch als elektrische Stromversorgung 22a eines ersten Koppelungsgliedes 21a dienen. Das Photovoltaikelement 32 dient als Stromversorgung 22b für das zweite Koppelungsglied 21b. Das Photovoltaikelement 32 kann aber auch eine interne Batterie 28 laden (z.B. wie in Fig.5). Die Versorgungsleitung 26 kann, wie in Fig.4, über eine Sperrdrossel 27 auch durch die Entkopplungsvorrichtung 35 geführt sein.

Bei Verwendung einer Versorgungsleitung 26 oder eines Photovoltaikelements 32 zur Spannungsversorgung eines Koppelungsgliedes 21 könnte zusätzlich eine Batterie 28 vorgesehen sein, wie in Fig.5 dargestellt. Mit der Batterie 28, die optional auch über die Versorgungsleitung 26 geladen werden könnte (wie in Fig.5 strichliert angedeutet), könnte die Datenkommunikation über die Datenleitung 20 auch aufrecht erhalten werden, wenn die Versorgungsleitung 26 unbestromt ist.

Die Kopplungsglieder 21a, 21b und gegebenenfalls auch die Stromversorgungen 22a, 22b, und die optionalen Batterien 28, der Entkopplungsvorrichtung 35 sind vorzugsweise in einer Entkopplungsbox 30 in einem gemeinsamen Gehäuse angeordnet. Das ermöglicht es, eine erfindungsgemäße HF Entkopplung einer Datenleitung 20 an jeder beliebigen Stelle einer Schweißanordnung vorzusehen. An der Entkopplungsbox 30 können entsprechende Anschlussbuchsen vorgesehen sein, um die Datenleitung 20, und gegebenenfalls auch andere Leitungen, wie einer Versorgungsleitung 26, daran anzuschließen. In einer Schweißanordnung nach Fig.1, könnte die Entkopplungsbox 30 beispielsweise vor der Steuerleitungsbuchse 13 am Schweißgerät 2 angeordnet sein, oder in der Drahtsteuerleitung 18 zwischen dem Schweißgerät 2 und der Schweißdrahtvorschubeinheit 15. Eine Entkopplungsbox 30 könnte bedarfsweise natürlich auch an mehreren Stellen der Schweißanordnung 1 angeordnet werden, beispielsweise an den beiden erwähnten Positionen.

Eine erfindungsgemäße Entkopplungsvorrichtung 35 kann natürlich auch in einer Schweißanordnung 1 verwendet werden, in der keine HF Zündung vorgesehen ist oder verwendet wird.

## Patentansprüche

1. Entkopplungsvorrichtung für eine HF Spannung auf einer Datenleitung (20), wobei in der Entkopplungsvorrichtung (35) ein erster Datenleitungsabschnitt (20a) der Datenleitung (20) mit einem ersten Kopplungsglied (21a) verbunden ist und ein zweiter Datenleitungsabschnitt (20b) der Datenleitung (20) mit dem zweiten Kopplungsglied (21b) verbunden ist, und wobei das erste Kopplungsglied (21a) und das zweite Kopplungsglied (21b) zur galvanischen Trennung der Datenleitung (20) über eine drahtlose Kopplungsstrecke (23) miteinander verbunden sind, **dadurch gekennzeichnet, dass** für das erste Kopplungsglied (21a) und das zweite Kopplungsglied (21b) jeweils eine eigene Stromversorgung (22a, 22b) vorgesehen ist und die Stromversorgungen (22a, 22b) des ersten Kopplungsgliedes (21a) und des zweiten Kopplungsgliedes (21b) für die HF Spannung auf der Datenleitung (20) voneinander entkoppelt ausgeführt sind.

2. Entkopplungsvorrichtung nach Anspruch 1, **dadurch gekennzeichnet, dass** die Stromversorgung (22a, 22b) des ersten Kopplungsgliedes (21a) und/oder des zweiten Kopplungsgliedes (21b) als Batterie (28) ausgeführt ist.

3. Entkopplungsvorrichtung nach Anspruch 1, **dadurch gekennzeichnet, dass** eine Versorgungsleitung (26) mit einer Versorgungsspannung durch die Entkopplungsvorrichtung (35) geführt ist, wobei in der Versorgungsleitung (26) eine Sperrdrossel (27) angeordnet ist, die ausgelegt ist, die beiden Seiten der Sperrdrossel (27) für eine gegebene HF Spannung auf der Versorgungsleitung (26) zu entkoppeln und dass die Stromversorgung (22a) des ersten Kopplungsgliedes (21a) die Versorgungsspannung auf einer Seite der Sperrdrossel (27) abgreift.

4. Entkopplungsvorrichtung nach Anspruch 3, **dadurch gekennzeichnet, dass** die Stromversorgung (22b) des zweiten Kopplungsgliedes (21b) die Versorgungsspannung auf der anderen Seite der Sperrdrossel (27) abgreift.

5. Entkopplungsvorrichtung nach Anspruch 1, **dadurch gekennzeichnet, dass** die Stromversorgung (22a, 22b) des ersten Kopplungsgliedes (21a) und/oder des zweiten Kopplungsgliedes (21b) als Photovoltaikelement (32) ausgeführt ist, und dass eine Lichtquelle (31) vorgesehen ist, die das Photovoltaikelement (32) mit Licht beaufschlagt.

6. Entkopplungsvorrichtung nach Anspruch 5, **dadurch gekennzeichnet, dass** eine Batterie (28) vorgesehen ist, die die Lichtquelle (31) mit elektrischer Energie versorgt.

7. Entkopplungsvorrichtung nach Anspruch 5, **dadurch gekennzeichnet, dass** die Lichtquelle (31) von der Stromversorgung (22a) des ersten Kopplungsgliedes (21a) mit elektrischer Energie versorgt ist und das Photovoltaikelement (32) als Stromversorgung (22b) des zweiten Kopplungsgliedes (21b) vorgesehen ist.

8. Entkopplungsvorrichtung nach Anspruch 7, **dadurch gekennzeichnet, dass** eine Versorgungsleitung (26) mit einer Versorgungsspannung durch die Entkopplungsvorrichtung (35) geführt ist und die Versorgungsleitung (26) als Stromversorgung (22a) des ersten Koppelungsgliedes (21a) vorgesehen ist.

9. Entkopplungsvorrichtung nach Anspruch 1 bis 8, **dadurch gekennzeichnet, dass** die Entkopplungsvorrichtung (35) als eigenständige Einheit in Form einer Entkopplungsbox (30) ausgeführt ist.

10. Schweißanordnung mit einem Schweißgerät (2) und einer mit dem Schweißgerät (2) verbundener Schweißkomponente und mit einer HF Zündeinheit (17) zum Erzeugen einer HF Zündspannung (uz) zum HF Zünden eines Lichtbogens zum Schweißen, wobei zwischen dem Schweißgerät (2) und der Schweißkomponente eine Datenleitung (20) vorgesehen ist und über die Datenleitung (20) eine Datenkommunikation zwischen dem Schweißgerät (2) und der Schweißkomponente implementiert ist, **dadurch gekennzeichnet, dass** ein erster Datenleitungsabschnitt (20a) der Datenleitung (20) mit einem ersten Kopplungsglied (21a) und ein zweiter Datenleitungsabschnitt (20b) der Datenleitung (20) mit einem zweiten Kopplungsglied (21b) verbunden ist, und wobei das erste Kopplungsglied (21a) und das zweite Kopplungsglied (21b) zur galvanischen Trennung der Datenleitung (20) über eine drahtlose Kopplungsstrecke (23) miteinander verbunden sind, **und dass** für das erste Kopplungsglied (21a) und das zweite Kopplungsglied (21b) jeweils eine eigene Stromversorgung (22a, 22b) vorgesehen ist und die Stromversorgungen (22a, 22b) des ersten Kopplungsgliedes (21a) und des zweiten Kopplungsgliedes (21b) für eine HF Spannung auf der Datenleitung (20) als Folge der HF Zündspannung (uz) voneinander entkoppelt ausgeführt sind.

11. Schweißanordnung nach Anspruch 10, **dadurch gekennzeichnet, dass** die Stromversorgung (22a, 22b) des ersten Kopplungsgliedes (21a) und/oder des zweiten Kopplungsgliedes (21b) als Batterie (28) ausgeführt ist.

12. Schweißanordnung nach Anspruch 10, **dadurch gekennzeichnet, dass** in der Schweißanordnung (1) eine Versorgungsspannung führende Versorgungsleitung (26) vorgesehen ist, wobei in der Versorgungsleitung (26) eine Sperrdrossel (27) angeordnet ist, die ausgelegt ist, die beiden Seiten der Sperrdrossel (27) für eine gegebene HF Spannung auf der Versorgungsleitung (26) zu entkoppeln und dass die Stromversorgung (22a) des ersten Kopplungsgliedes (21a) die Versorgungsspannung auf einer Seite der Sperrdrossel (27) abgreift.

13. Schweißanordnung nach Anspruch 12, **dadurch gekennzeichnet, dass** die Stromversorgung (22b) des zweiten Kopplungsgliedes (21b) die Versorgungsspannung auf der anderen Seite der Sperrdrossel (27) abgreift.

14. Schweißanordnung nach Anspruch 10, **dadurch gekennzeichnet, dass** die Stromversorgung (22a, 22b) des ersten Kopplungsgliedes (21a) und/oder des zweiten Kopplungsgliedes (21b) als Photovoltaikelement (32) ausgeführt ist, und dass eine Lichtquelle (31) vorgesehen ist, die das Photovoltaikelement (32) mit Licht beaufschlagt.

15. Schweißanordnung nach Anspruch 10, **dadurch gekennzeichnet, dass** eine Batterie (28) vorgesehen ist, welche die Lichtquelle (31) mit elektrischer Energie versorgt.

16. Schweißanordnung nach Anspruch 10, **dadurch gekennzeichnet, dass** die Lichtquelle (31) von der Stromversorgung (22a) des ersten Koppelungsgliedes (21a) mit elektrischer Energie versorgt ist und das Photovoltaikelement (32) als Stromversorgung (22b) des zweiten Koppelungsgliedes (21b) vorgesehen ist.

17. Schweißanordnung nach Anspruch 16, **dadurch gekennzeichnet, dass** eine Versorgungsleitung (26) mit einer Versorgungsspannung durch die Entkopplungsvorrichtung (35) geführt ist und die Versorgungsleitung (26) als Stromversorgung (22a) des ersten Koppelungsgliedes (21a) vorgesehen ist.

18. Verfahren zur Entkopplung einer Datenleitung (20) von einer HF Spannung auf der Datenleitung (20), wobei über die Datenleitung (20) Daten (D) zwischen einem Schweißgerät (2) und einer mit dem Schweißgerät (2) verbundenen Schweißkomponente ausgetauscht werden und mit einer HF Zündeinheit (17) eine HF Zündspannung zum HF Zünden eines Lichtbogens zum Schweißen mit dem Schweißgerät (2) erzeugt wird, wobei die HF Zündspannung die HF Spannung auf der Datenleitung (20) erzeugt, **dadurch gekennzeichnet, dass** die Datenleitung (20) galvanisch in einen ersten Datenleitungsabschnitt (20a) und einen zweiten Datenleitungsabschnitt (20b) getrennt wird und der erste Datenleitungsabschnitt (20a) mit einem ersten Kopplungsglied (21a) verbunden wird und der zweite Datenleitungsabschnitt (20b) mit einem zweiten Kopplungsglied (21b) verbunden wird, und wobei das erste Kopplungsglied (21a) und das zweite Kopplungsglied (21b) über eine drahtlose Kopplungsstrecke (23) miteinander verbunden werden, **und dass** das erste Kopplungsglied (21a) und das zweite Kopplungsglied (21b) jeweils von einer eigenen Stromversorgung (22a, 22b) versorgt werden und die Stromversorgungen (22a, 22b) des ersten Kopplungsgliedes (21a) und des zweiten Kopplungsgliedes (21b) für die HF Spannung auf der Datenleitung (20) voneinander entkoppelt werden.
